# EUROPÄISCHE PATENTSCHRIFT

(11) **EP 0 396 498 B1**
(45) Veröffentlichungstag und Bekanntmachung des Hinweises auf die Patenterteilung: **13.01.1993**
(21) Anmeldenummer: 90710011.9
(22) Anmeldetag: 30.04.1990
(51) Int. Cl.: B21C 37/083, B23K 28/00

(54) **Verfahren zum Verbinden von ebenen Bändern mit einer Dicke von 0,2 bis 1,5 mm**
Procedure for the connection of flat bands with a thickness of 0,2 to 1,5 mm
Procédé pour joindre des bandes plates d'une épaisseur de 0,2 à 1,5 mm

(30) Priorität: 05.05.1989 DE 3914757
(43) Veröffentlichungstag der Anmeldung: 07.11.1990
(73) Patentinhaber: Oxytechnik Ges. für Systemtechnik mbH, 65760 Eschborn (DE)
(72) Erfinder: Klein, Erhard, D-6365 Rosbach 1 (DE); Roth, Gerhard, D-6369 Schöneck 1 (DE)
(74) Vertreter: Berdux, Klaus, Dipl.-Ing.

(56) Entgegenhaltungen:
- DE-A- 3 207 625
- US-A- 2 782 488
- US-A- 3 239 909
- WELDING PRODUCTION Band 32, Nr. 5, Mai 1985, Seiten 39, 40, Abingdon, Cambridge, GB ; V.G. VERBITSKII et al. : "Increasing arc stability and weld quality at high welding speeds" * Seite 39
- PATENT ABSTRACTS OF JAPAN Band 7, Nr. 254 (M-255)(1399, 11 November 1983 & JP-A-58138566 (MITSUBISHI JUKOGYO K.K.)

## Beschreibung

Die Erfindung betrifft ein Verfahren zum Verbinden von ebenen Bändern, vorzugsweise Fertigbändern mit einer Dicke von 0,2 bis 1,5 mm nach dem Oberbegriff des Anspruches 1.

Solche Fertigbänder werden als Bunde (Coils) überwiegend im Automobilbau eingesetzt. Zur Schlußkontrolle werden die Coils umgewickelt und dabei überprüft. Werden hierbei Fehler oder Unregelmäßigkeiten in der Beschaffenheit und/oder der Beschichtung (Zink, Farbe, Phenolharz, Phosphat) festgestellt, werden die fehlerhaften Bereiche herausgeschnitten. Hierzu weist die Umwickellinie im Eingang eine Schopfschere auf. Eine sich anschließende kombinierte Schneid- und Schweißstation dient zum Vorbereiten und Fügen der Schweißkanten und dem Verbinden der Bandenden durch Schweißen.

Derartige kombinierte Schneid- und Schweißstationen (Bandschweißanlagen) sind seit langem bekannt (US 2,782,488). Die Bandenden von Bändern in Dicken von 0,5 mm (DBP 11 16 034) werden mittels Flamme, Lichtbogen oder Widerstandspunktschweißen verbunden. Dabei bestand immer das Bedürfnis, möglichst glatte Schweißnähte ohne Schweißnahtüberhöhung zu erhalten. Das war früher lediglich durch mechanische Nachbearbeitung der Schweißnaht möglich (Broschüre Kontinumat Bandschweißanlagen, Messer Griesheim GmbH, Nr. 27.0001, DE 32 07 625).

Bei einem weiteren bekannten Verfahren werden die Bandenden auf einen kurz überlappenden Stoß zusammengefahren und mittels Widerstand-Quetschnahtschweißens verbunden. Die unter der Wirkung des Stromdurchganges teigig werdenden Bandenden werden durch die Elektrodenkraft preßgeschweißt und so untereinander verquetscht, daß der Überlappungsbereich fast auf Einzelbanddicke eingeebnet wird.

Gemäß praktischer Erfahrung ist es nicht möglich, die beim Widerstand-Quetschnahtschweißen entstehende Nahtüberhöhung durch Tiefziehen, Stanzen, Schneiden usw. weiterzuverarbeiten. Als weiterer Nachteil kommt hinzu, daß bei Fertigbändern mit beschichteter Oberfläche diese Beschichtung zum Widerstand-Quetschnahtschweißen im Schweißnahtbereich entfernt werden muß.

Neben diesem gattungsbildenden Stand der Technik ist es bereits bekannt, Stahlbänder stumpf mit einem Laserstrahl zu verbinden. Durch diese Maßnahme wird einerseits die Beschichtung während des Schweißens durch die hohe Energieleistung des Laserstrahles weggebrannt, so daß auf ein vorhergehendes Entfernen der Beschichtung verzichtet werden kann; andererseits wird mit dem Laserstrahl nur eine unbedeutende Nahtüberhöhung erzeugt, die keiner Nachbearbeitung bedarf (EP0151848B1, DE 35 02 368 A1).

Der Nachteil dieses Verfahrens ist in den für viele Anwendungsbereiche zu hohen Investitions- und Betriebskosten zu sehen.

Der Erfindung liegt die Aufgabe zugrunde, die Bänder nach einem Verfahren zu verbinden, mittels dem diese kostengünstig stumpf geschweißt werden können und bei dem die Schweißnaht nicht nachbearbeitet werden muß.

Diese Aufgabe wird erfindungsgemäß durch die kennzeichnenden Merkmale des Anspruches 1 gelöst.

Das seit den 60er Jahren bekannte Mikroplasmaschweißverfahren mit seinem Strombereich zwischen 0,5 und 50 Ampere wurde trotz des oben angesprochenen Bedürfnises nie in Betracht gezogen, wahrscheinlich deshalb, weil die Bandbreiten von in Bandschweißanlagen verarbeiteten Bändern 600 bis 2500 mm betragen, während Mikroplasmaschweißen dem Fachmann für das Schweißen von Kleinteilen bekannt war. Auch in DE-Z "Schweißtechnik 26,1976,3, Seite 108 und DE-Z "Der Praktiker 3/89, Seite 115, 118 ist im wesentlichen von Kleinteilen die Rede("Schweißtechnik" 2, rechte Spalte, vorletzter Absatz; Praktiker, Seite 115 rechte Spalte, 3. Zeile, Seite 118 rechte Spalte, unten).

Auch in der DE-Z Metzler, Jürgen "Plasmaschweißen" in Technische Rundschau Nr. 41, 06.10.1972, Seiten 25, 27, 29 ist es ebenfalls nur bekannt, das Mikroplasmaschweißverfahren zum Verbinden von schmalen Bändern zu verwenden, hier im Dickenbereich von 0,1 mm. Die Bänder werden in einer Sonder-Spannvorrichtung - nicht aber in einer Bandschweißanlage - zu einem rohrförmigen Gebilde verschweißt.

Weiterhin ist aus der Informationsschrift "Plasma welding thicknesses of the order of 0,1 mm; Reprint 12/70 from the "Schweißtechnik" text book serries, Vol 58, Deutscher Verlag für Schweißtechnik GmbH" bekannt, das Plasmaverbindungsschweißen für die Fertigung kontinuierlich längsnahtgeschweißter Rohre im Wanddickenbereich von 0,2 - etwa 6 mm anzuwenden.

Beim Rohrlängsnahtschweißen mittels der Plasmatechnik entstehen jedoch die Probleme der genauen Führung des Brenners und der genauen Positionierung der Stoßfuge nicht, da einerseits der Brenner ortsfest angeordnet ist und andererseits aufgrund der dreidimensionalen Ausbildung die elastischen Wände des Rohres zu einem O-Spalt am Schweißpunkt zusammengedrückt werden können, was bei ebenen Teilen nicht möglich ist.

Durch die Erfindung werden die anteiligen Kosten der Schweißeinrichtung für eine Fertigbandschneid- und Schweißstation um den Faktor 20 verbilligt, weil die Stumpfschweißnaht mit einem an sich bekannten Mikroplasmaschweißbrenner hergestellt werden kann. Für den Anwender liegt der Vorteil in den niedrigen Investitions- und Betriebskosten. Überraschenderweise hat sich gezeigt, daß mit der Erfindung die nahezu gleiche Schweißnahtgüte wie mit einem Laserstrahl erreicht werden kann. Auf eine mechanische Nachbearbeitung der Schweißnaht kann verzichtet werden.

Im Folgenden wird die Erfindung anhand eines Ausführungsbeispieles näher beschrieben:

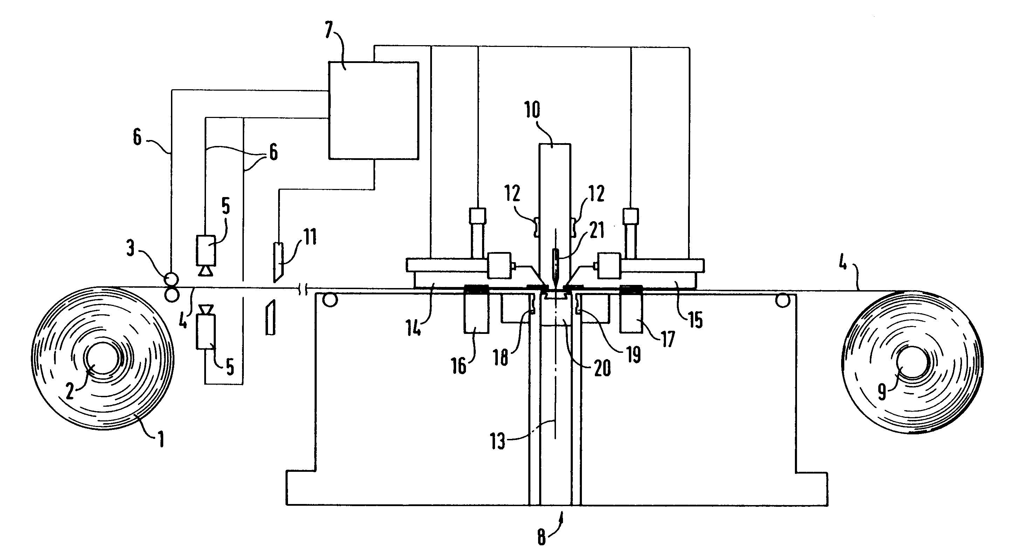

In der Zeichnung ist das Coil 1 auf einem Haspel 2 angeordnet und wird über einen nicht näher dargestellten Antrieb von dieser abgewickelt. Auf dem Fertigband 4 sind Vorschub- oder Wegmeßeinheiten 3 angeordnet. Dabei werden die Ober- und Unterseiten des Fertigbandes 4 mittels optischer Einrichtungen 5 oder visuell kontrolliert. Die optischen Einrichtungen 5 und die Vorschub- oder Wegmeßeinheiten 3 sind über Leitungen 6 mit einer Steuerung 7 verbunden. Die Steuerung 7 kontrolliert eine Schopfschere 11 und eine Vorrichtung 8 zum Schneiden und Schweißen. Das Fertigband 4 läuft durch diese Vorrichtung 8 und wird nach dem Austritt auf einem Haspel 9 wieder zu einem Coil mit Sollgewicht aufgewickelt.

Werden von den optischen Einrichtungen 5 Unregelmäßigkeiten auf der Ober- oder Unterseite des Fertigbandes 4 festgestellt, wird dies der Steuerung 7 gemeldet. Diese errechnet an Hand der von den Vorschub- oder Wegmeßeinheiten 3 ermittelten Lage der Unregelmäßigkeiten den Zeitpunkt, an dem der Anfang der Unregelmäßigkeiten unter der Schopfschere 11 angeordnet ist. Mit dieser wird das Fertigband 4 am Beginn des fehlerhaften Bereiches getrennt. Nach dem ersten Trennschnitt wird das mit dem zweiten Haspel 9 verbundene Fertigband 4 über einen weiteren Antrieb soweit verfahren, bis das Bandende die Mittellinie 13 der Vorrichtung 8 zum Schweißen und Schneiden überquert hat. Mittels der Schopfschere 11 werden in Abhängigkeit von der Länge der Unregelmäßigkeiten 2 bis 3 m lange Streifen abgeschnitten und das Bandende des Fertigbandes 4 in Durchlaufrichtung vor der Mittellinie 13 positioniert. Anschließend werden die während des vorgehend beschriebenen Vorganges geöffneten Spannbacken 14, 15 auf den Klemmbalken 16, 17 geklemmt. Nach dem seitlichen Ausrichten der Bandenden zur Bandlängsachse erfolgt das Spannen der Spannbacken 14, 15 auf den unteren Schermessern 18, 19. Dieser Vorgang ist in der Zeichnung nicht näher dargestellt. Mit der Schere 10 werden die auf den Klemmbalken 16, 17 festgeklemmten und auf den unteren Schermessern 18, 19 festgespannten Bandenden gleichzeitig mit einer Genauigkeit von kleiner als 0,1 Millimeter, vorzugsweise kleiner 0,05 Millimeter, bezogen auf eine Bandbreite zwischen 600 und 2500 mm geschnitten. Danach werden die Spannbacken 14, 15 von den Schermessern 18,19 gelöst, die beiden geschnittenen Bandenden werden aus dem Schneidkantenbereich der Schermesser 12 in geklemmter Anordnung zurückgezogen und die Schere wird hochgefahren bis die Schweißunterlage 20 auf gleicher Höhe mit den unteren Schermessern 18, 19 steht. Danach wird das eine ebene Bandende in Schweißstellung, d.h. in Richtung Mittellinie 13 verfahren und mittels der Spannbacken 14 auf der Schweißunterlage 20 festgespannt. Das zweite ebene Bandende wird gegen die Schnittfläche des ersten Bandendes auf Stumpfstoß gefahren und ebenfalls mittels Spannbacken 15 auf der Schweißunterlage festgespannt. Die auf Stumpfstoß zusammengelegten Bandenden weisen dabei entlang der Bandbreite einen maximalen Zwischenraum von kleiner 0,1 mm, vorzugsweise kleiner 0,05 mm auf. Anschließend werden die Bänder mit einem Mikroplasma-Schweißbrenner 21 mit einer Stromstärke zwischen 5 und 50 Ampere verschweißt. Überraschenderweise hat sich dabei gezeigt, daß sich mit diesem Plasma-Schweißlichtbogen keine Bandüberhöhungen ausbilden.

## Patentansprüche

1. Verfahren zum Verbinden von ebenen Bändern (4), vorzugsweise Fertigbändern, mit einer Dicke von 0,2 bis 1,5 mm, welche mit vorstehenden Bandenden jeweils zwischen Elementen (14-20) geklemmt und festgespannt und in dieser Anordnung geschnitten werden, danach die Spannung gelöst und die Bänder (4) in geklemmter Anordnung auf Stumpfstoß gefügt und anschließend wieder gespannt werden,
gekennzeichnet durch
die Verwendung eines Plasmaschweißlichtbogens (21) mit einer Stromstärke zwischen 5 und 50 Ampere zum Verschweißen von Bändern (4), deren Bandenden eine Breite zwischen 600 und 2500 mm aufweisen und die auf Stumpfstoß zusammengelegt entlang der Bandbreite einen maximalen Zwischenraum von kleiner als 0,1 mm aufweisen.

2. Verfahren nach Anspruch 1,
dadurch gekennzeichnet,
daß der Zwischenraum kleiner/gleich 0,05 mm ist.

## Claims

1. Method for connecting plane bands (4), preferably finished bands, with a thickness of 0.2 to 1.5 mm, which with projecting band ends are clamped and tightened in each case between elements (14-20) and cut in this arrangement, the tension then being released and the bands (4) in clamped arrangement being joined in a butt joint and subsequently tightened again, characterised by the use of a plasma welding arc (21) with a current strength between 5 and 50 amperes for welding bands (4), the band ends of which have a width between 600 and 2500 mm and which, put together in a butt joint along the band width, have a maximum intermediate space smaller than 0.1 mm.

2. Method according to Claim 1, characterised in that the intermediate space is smaller than/equal to 0.05 mm.

## Revendications

1. Procédé de jonction de bandes plates (4) de préférence de bandes terminées ayant une épaisseur comprise entre 0,2 et 1,5 mm selon lequel on serre et fixe les extrémités de bandes en saillie respectivement entre les éléments (14-20) et on les coupe dans cette disposition, puis on ouvre le serrage et on réunit les bandes (4) à l'état serré, pour venir bout à bout puis on resserre de nouveau, procédé caractérisé en ce qu'on utilise un arc de soudage au plasma (21) avec une intensité de courant comprise entre 5 et 50 ampères pour souder les bandes (4) dont les extrémités ont une largeur comprise entre 600 et 2500 mm réunies bout à bout et qui, dans la direction transversale, ont un intervalle maximal inférieur à 0,1 mm.

2. Procédé selon la revendication 1 caractérisé en ce que l'intervalle est inférieur à 0,05 mm.
